# EUROPEAN PATENT APPLICATION

(11) **EP 1 306 662 A1**
(43) Date of publication of application: **02.05.2003**
(21) Application number: 01930238.9
(22) Date of filing: 22.05.2001
(51) Int. Cl.: G01N 21/27

(54) **DIFFERENTIAL SPR SENSOR AND MEASURING METHOD USING IT**

(30) Priority: 25.05.2000 JP 2000154614
(71) Applicant: Katayanagi Institute, Hachioji-shi, Tokyo 192-0981 (JP)
(72) Inventor: KARUBE, Isao 2-54-10, Utsukushigaoka, Kanagawa 225-0002 (JP)
(74) Representative: Ebner von Eschenbach, Jennifer
(86) International application number: JP0104255
(87) International publication number: WO01090728

(57) **Abstract**

The present invention provides a differential SPR sensor that is capable of independently determining resonance wavelengths without determining a baseline. A differential SPR sensor is formed with a surface immobilized with a recognition component and a surface not immobilized with the component on a metal film. The sensor comprises a plurality of dielectric films of different film thicknesses formed on the metal film, wherein one of said dielectric films is taken to be a reference surface and at least the other one dielectric film is taken to be a working surface immobilized with the recognition component. Preferably, the sensor is a probe-type SPR sensor, and a working surface and a reference surface are formed on a metal film providing a sensor surface of the probe.

## Description

### Technical Field

The present invention relates to an SPR sensor utilizing Surface Plasmon Resonance (SPR) and particularly relates to a differential SPR sensor. The SPR sensor of the present invention is suitable for implementation as a probe-type biosensor.

### Background Art

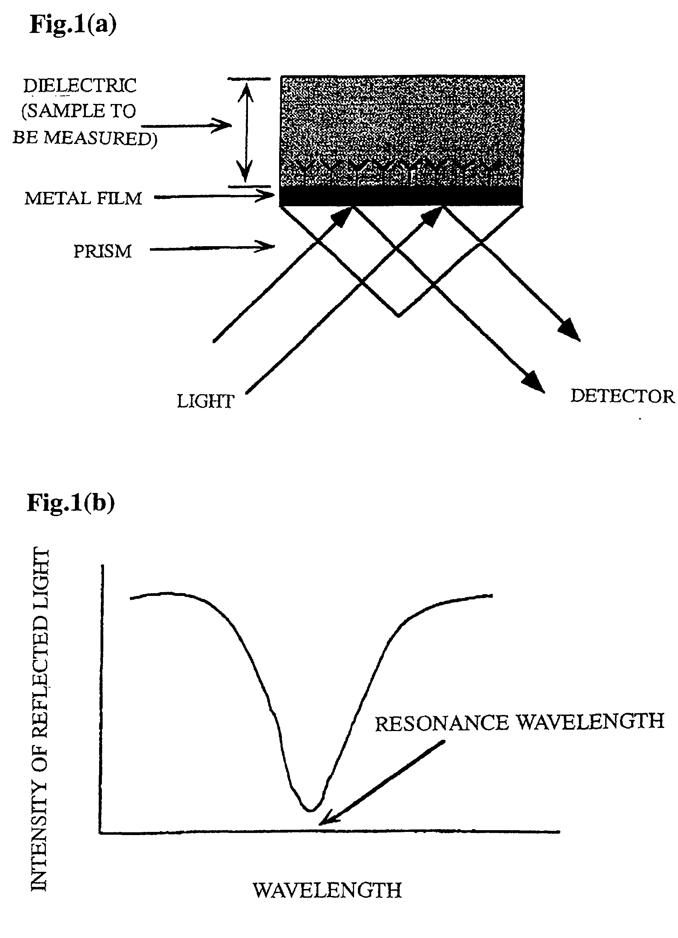

An SPR sensor typically has a structure as shown in FIG. 1(a). A surface plasmon (Surface Plasmon: SP) is decided by the dielectric constant of a metal and a sample. This SP wavenumber vector can be excited through irradiation with light, and with a typical SPR sensor, SP excitation is carried out by irradiation with light from the side of the prism in the drawings.

Results obtained in the case of using the arrangement of FIG. 1(a) and white light as a light source are as shown in FIG. 1(b) and a minimum value can be obtained for a certain wavelength. In this specification this is referred to as a resonance wavelength. This resonance wavelength coincides with the SP wavenumber vector and the dielectric constant of the sample can be determined from the resonance wavelength. In experiments for detecting proteinic interaction, for example, antibodies are immobilized onto a metal film in order to cause an antigen-antibody reaction on the metal film. A method therefore exists for the case of utilizing an SPR sensor as a biosensor so as to estimate an extent of an antigen-antibody reaction by estimating change in dielectric constant on the metal film at this time.

SPR sensors are widely used as devices for detecting proteinic interaction and are currently attracting attention. However, SPR sensors currently in use are large and adopt a flow injection format and it is therefore not possible to measure samples in situ. As a result, so-called probe-type sensors are considered to be effective methods that are capable of measuring samples in situ.

However, in the case of detecting proteinic interaction using an SPR sensor, it is necessary to decide a baseline and estimate proteinic interaction as an amount of variation from this value every time a measurement is carried out. In other words, it is also necessary to have a sample for deciding the baseline in addition to the sample being measured in order to detect proteinic interaction of the subject sample. Therefore, according to measuring methods of the related art, it is still necessary to determine a baseline using a further sample even in cases of in-situ measuring using a probe-type SPR sensor. This reduces the advantageousness of in situ measurement that is a feature of probe-type SPR sensors.

The use of differential SPR sensors has therefore been studied. The essence of differential SPR sensors is that a surface immobilized with antibodies and a surface not immobilized with antibodies are made on the same metal film, with antigen-antibody reactions then being estimated by comparing resonance wavelengths obtained for both surfaces. However, it is difficult to independently observe phenomena occurring at these surfaces even when a surface immobilized with antibodies and a surface not immobilized with antibodies are made on the same metal film. This is because it is difficult to independently determine resonance wavelengths at the respective surfaces because changes in the dielectric constant obtained using, for example, antigen-antibody reactions are extremely small, i.e. changes in resonance wavelength are extremely small.

In order to resolve the aforementioned drawbacks, the present invention sets out to provide a differential SPR sensor capable of independently determining resonance wavelengths and that does not require a baseline to be decided upon.

### Disclosure of the Invention

The technological means adopted by the present invention are characterized by a differential SPR sensor formed with a surface immobilized with a recognition substance and a surface not immobilized with the substance on a metal film, the sensor comprises a plurality of dielectric films of differing film thicknesses formed on the metal film, wherein one dielectric film surface is taken to be a reference surface and the other dielectric film surface is taken to be a working surface immobilized with the recognition substance.

In addition to probe-type SPR sensors, these differential SPR sensors can also be applied to so-called flow injection-type SPR sensors but can be particularly effectively adopted for probe-type SPR sensors for the following reasons.

A differential SPR sensor has the following advantages: (1) It is not necessary to determine a baseline. (2) It is possible to suppress lowering of measurement precision due to non-specific adsorption. (3) Lowering of measurement precision due to changes in temperature can be suppressed. The advantages (2) and (3) can also be realized for methods other than differential methods. Regarding (2), drugs can be added to suppress non-specific binding within a sample to be measured, and regarding (3), this can be achieved through temperature control. However, in the case of a probe type, the aim is to complete measurement with the sensor soaked in the sample (for example, the sea or tissue within a body etc.). The aforementioned resolving method can therefore not be adopted, and it therefore follows that the differential method is a useful means for probe-type sensors. Regarding advantage (1), in the case of a flow injection type, there are generally many cases where there is a sufficient amount of time for experimenting in a laboratory, and as changing fluid channels is straightforward, the differential method is therefore not of any great benefit. The differential method is therefore of benefit with probe-types that demand that measurement is both convenient and rapid.

A structure where dielectric layers are formed on a metal film is also beneficial with regards to probe types. When the differential method is used in flow injection, it is possible to implement the differential method if the surface immobilized with antibodies and the surface not immobilized with antibodies are formed on the same metal film a certain distance apart from each other. In this case, the dielectric layer is not completely necessary, and when dielectric layers of different thicknesses are used, the benefit that the operation of "providing separation of a certain distance" can be omitted remains. With respect to this, in the case of a probe type, even if a surface immobilized with antibodies and a surface not immobilized with antibodies are made in the operation "providing separation of a certain distance", it is not possible to observe these surfaces independently. Therefore, providing of dielectric of different film thicknesses is an essential structural element for probe types.

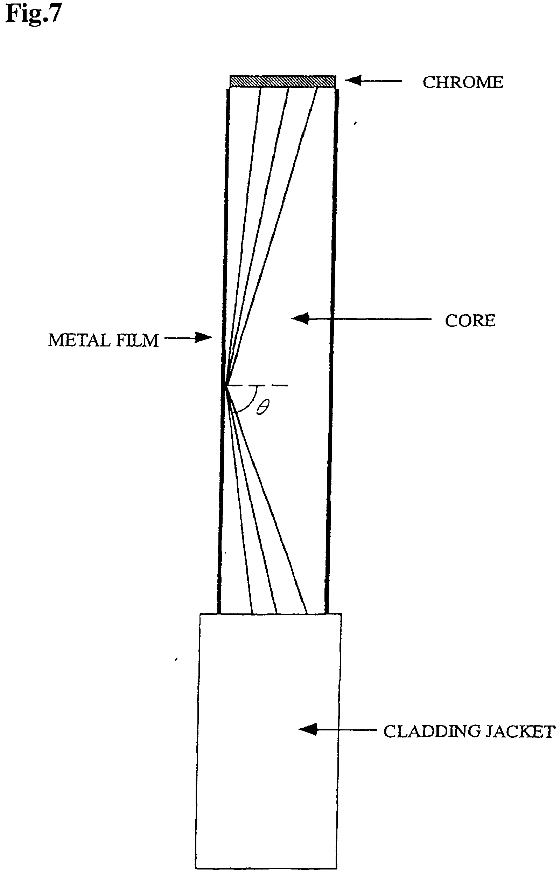

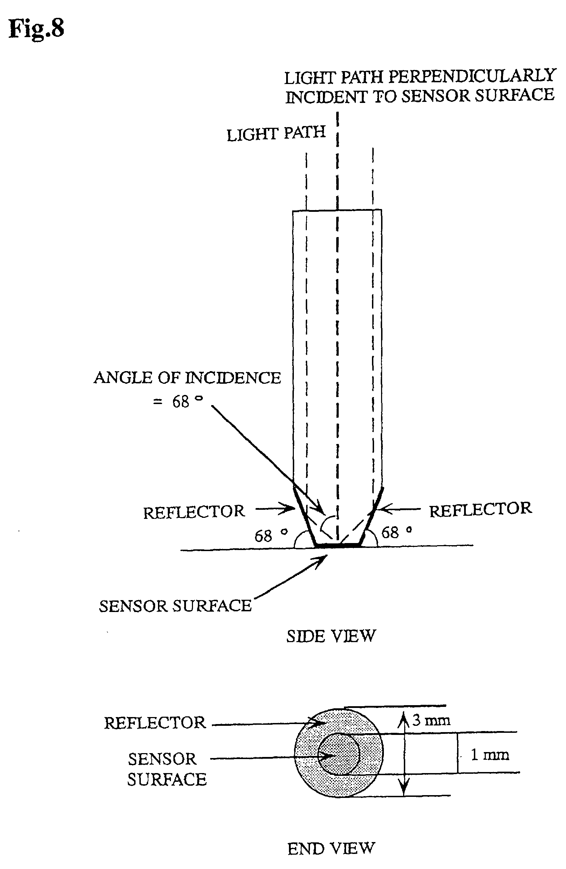

A probe-type SPR sensor comprises a light source, a sensor probe, and an optical detector. The probe comprises a metal film equipped with a sensor surface, and a reflecting surface. The base end of the probe is configured as an end part for letting light pass in and out. The light source is optically connected to the base end of the probe and the light detector receives light emitted from the base end of the probe via the metal film and the reflecting surface. The probe-type sensor itself is known and can be adopted in the present invention as the related probe-type sensor structure shown, for example, in FIG. 7 and FIG. 8.

However, according to the research of this applicant, the sensor surface and the reflecting surface are formed as in inclined surface extending at an incline with respect to the lengthwise direction of the probe, with the construction being such that these surfaces meet each other at right angles. It can therefore be understood that a probe-type SPR sensor with superior measuring sensitivity compared to related probe sensors can be provided. It is preferable for the angle of incidence of light with respect to the sensor surface to be 60 degrees to 80 degrees with this kind of probe type sensor.

The measuring method adopted by the present invention is characterized by a measuring method employing a differential SPR sensor formed with a surface immobilized with a recognition substance and a surface not immobilized with the substance on a metal film, the sensor comprises a plurality of dielectric films of differing film thicknesses formed on the metal film, wherein one dielectric film surface is taken to be a reference surface and the other dielectric film surface is taken to be a working surface immobilized with the recognition substance. In this measuring method, a substance to be measured is measured by comparing measuring results for the working surface and measuring results for the reference surface.

An example of antigen measurement constituting a typical application of related art measurement methods is as described in the following. Antibodies that specifically react with antigens are immobilized to the sensor surface. First, the resonance angle of a buffer solution not including antigens is measured. An antigen-antibody reaction is then caused to occur after a predetermined period of time in the buffer solution including antigens. After this reaction, the sensor surface is washed in the buffer solution not including antigens, and the resonance angle is measured after the reaction. The difference in the resonance angle before and after the antigen-antibody reaction is then obtained and is used to calculate the antigen concentration. In this respect, with the measuring method of the present invention, antigen concentration is calculated by comparing measurements for a working surface and a reference surface in a buffer solution including antigens.

The SPR sensor of the present invention may preferably be used for detection of antigen-antibody reactions but the SPR sensor of the present invention is by no means limited to measurement of antigen-antibody reactions, and may also be applied broadly to cases such as where mutual interaction of states are "binding". For example, hybridization of nucleic acids or nucleic acid analogs, mutual interaction between nucleic acids and proteins, binding between receptors and ligands, and mutual interaction between sugar chains, etc., can also be employed. Regarding the recognition substance immobilized to the sensor surface, substances other than antibodies may be immobilized according to the substance to be measured. Regarding the dielectric layer affixed to the metal film, in this embodiment, a plasma polymerization film is used but the film forming means is by no means limited in this respect and other known film-forming means may also be adopted. In this embodiment the dielectric layer is an HDMS but other dielectric films may also be used. In the embodiment described below, a working surface and a reference surface are configured by forming two dielectric films of different film thicknesses but, for example, two substances may also be measured at the same time by providing three dielectric films of differing film thickness, immobilizing two with different antibodies, and taking the remaining film as a reference surface.

### Brief Description of the Drawings

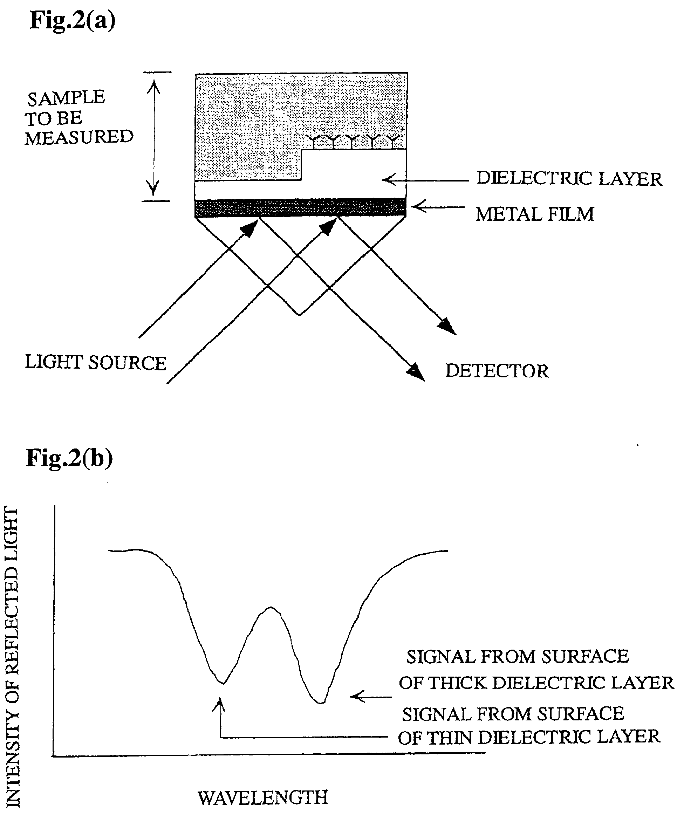

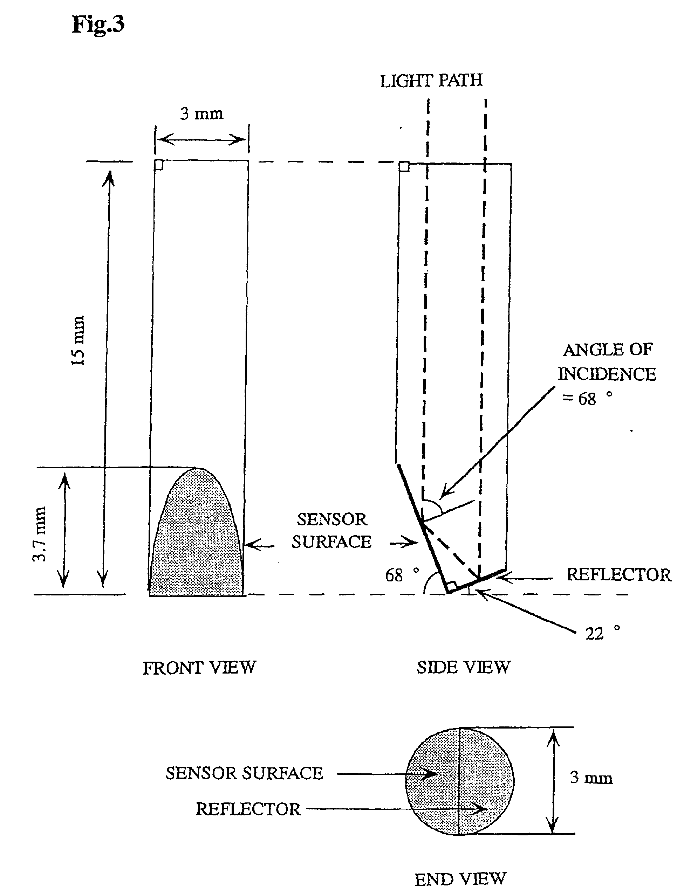

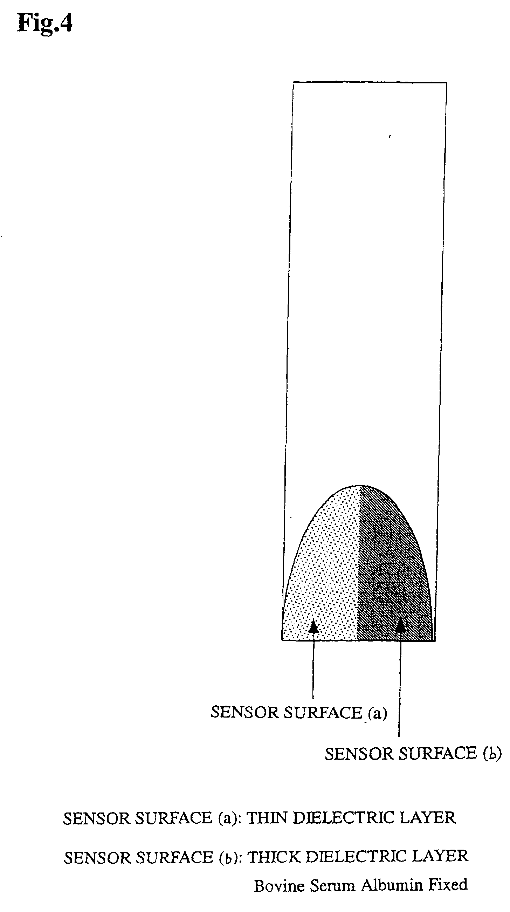

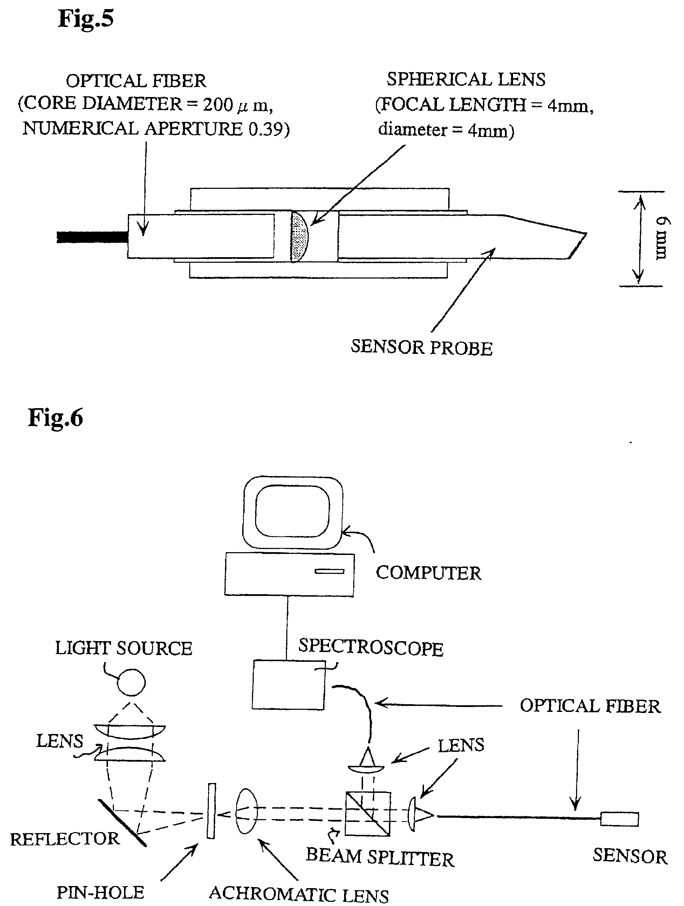

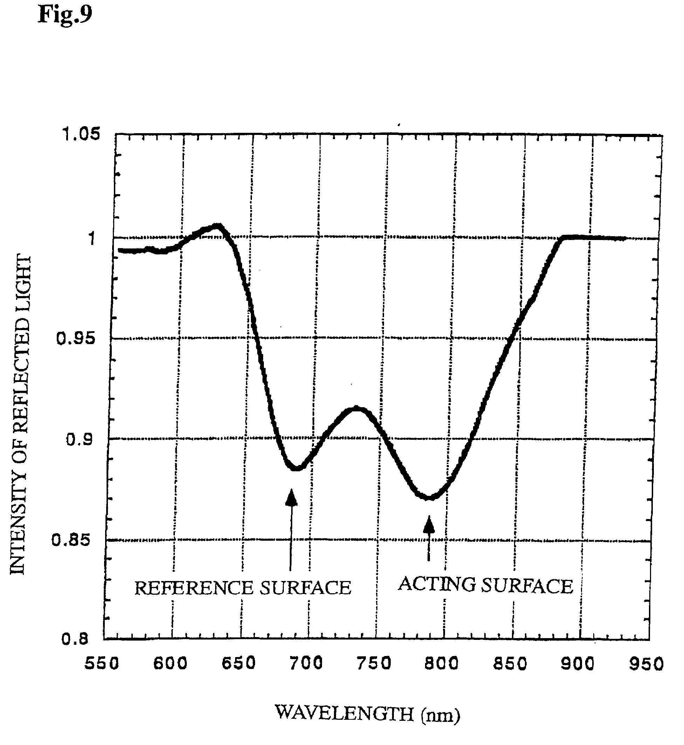

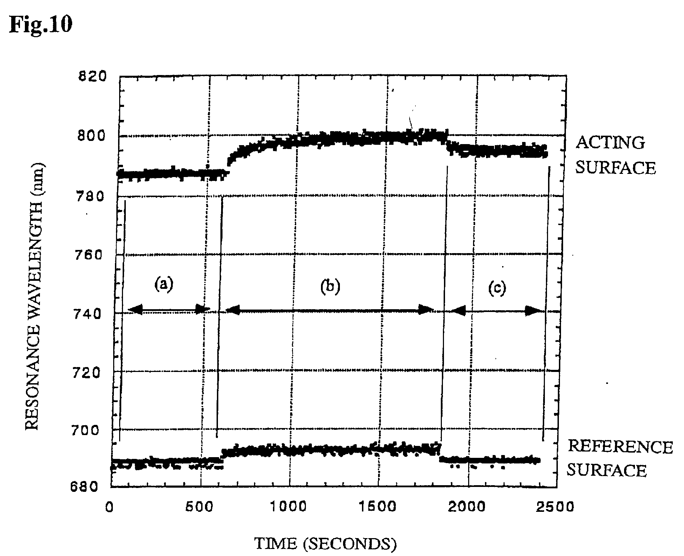

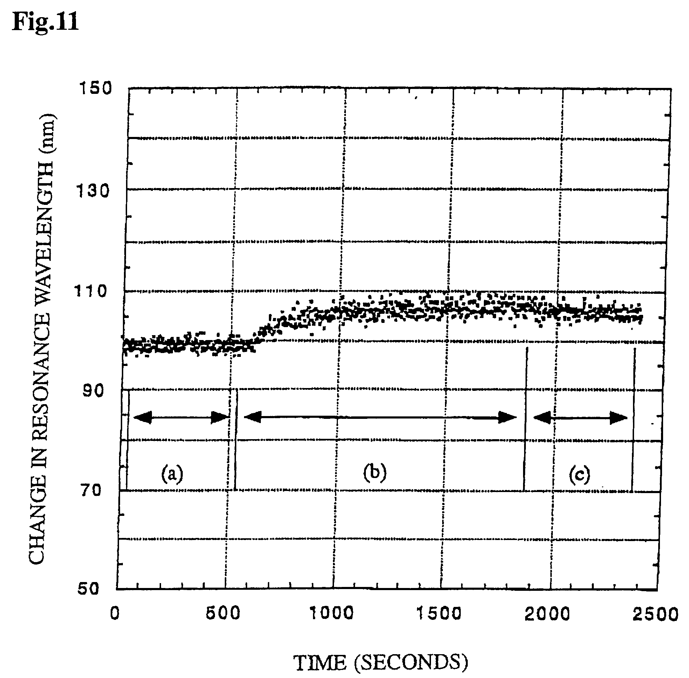

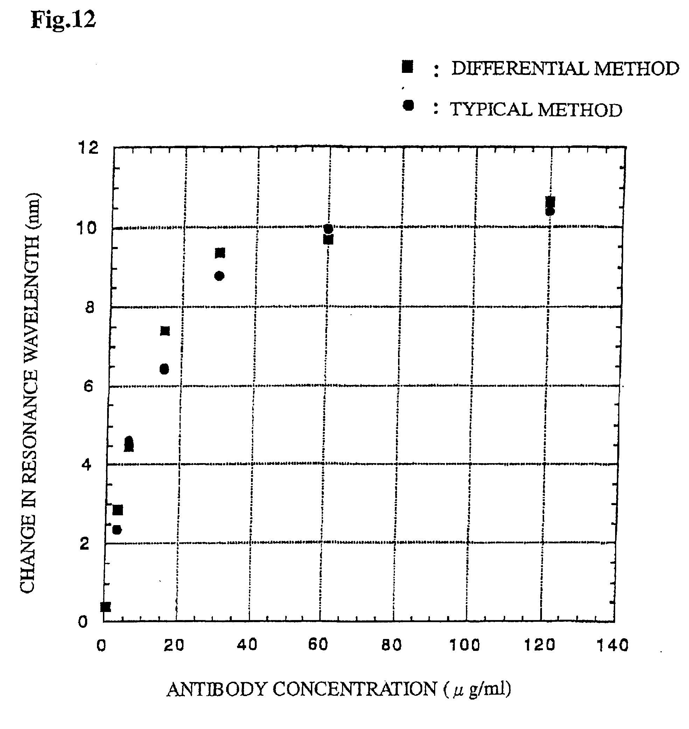

FIG. 1(a) is a view showing the principle of an SPR sensor and FIG. 1(b) is an observed signal; FIG. 2(a) is a view showing the principle of a differential SPR sensor and FIG. 2(b) is a signal observed using the differential SPR sensor; FIG. 3 is a front view, side view and end view of a probe-type SPR sensor; FIG. 4 is an enlarged view of a sensor probe showing the sensor surface; FIG. 5 is an outline view of fixed portions of a probe-type SPR sensor; FIG. 6 is an overall view of a probe-type SPR sensor; FIG. 7 is a schematic view of a known probe-type SPR sensor (Jorgenson et. al. 1991); FIG. 8 is a schematic view of a known probe-type SPR sensor (Chaill et. al 1997); FIG. 9 is a view showing the relationship between intensity and wavelength of reflected light obtained at the differential probe-type SPR sensor; FIG. 10 is a view showing results obtained for the working surface and reference surface respectively; FIG. 11 is a view showing results obtained using the differential method; and FIG. 12 is a view showing a calibration curve for BSA antibody concentration obtained for the case of using differential methods and typical methods.

### Best Mode for Carrying Out the Invention

A description is given of a differential SPR sensor based on FIG. 2. In the schematic view of FIG. 2(a), there is shown a stepped sensor surface configured by forming dielectric layers of different film thicknesses on the same metal film and immobilizing antibodies to one surface. As can be seen in FIG. 2(b), the signal obtained in this case has two resonance wavelengths, one for the surface of the thick dielectric layer, and one for the surface of the thin dielectric layer. Namely, changes in the respective resonance wavelengths can therefore be clearly observed by obtaining the resonance wavelengths that depend upon the thicknesses of the dielectric layers for the surfaces.

A description is now given of the configuration of the sensor probe based on FIG. 3. FIG. 3 shows the basic configuration of a sensor probe relating to the present invention and this is by no means particularly limited to a differential sensor. The sensor probe has a longitudinal body, and is also formed from a metal film having a sensor surface, and a reflecting mirror (reflecting surface) at a distal end (the bottom end in the drawings), while on the other hand, a proximal end of the probe (the upper end in the drawings) has a portion allowing light to enter and exit. The sensor surface and the reflecting surface are formed so as to be inclined surfaces extending in the direction of inclination with respect to the lengthwise direction of the probe and meet at right-angles with respect to each other. The sensor probe is such that collimated light is incident from above in the drawings. The sensor surface extends in an inclined manner at an angle of 68 degrees with respect to a surface orthogonal with respect to the light path and is designed so that light incident from the upper end plane is incident to the sensor surface at an angle of incidence of 68 degrees. The reflecting surface extends so as to be inclined at an angle of 22 degrees with respect to a surface orthogonal with respect to the light path. The design is also such that light reflected by the sensor surface is reflected by the reflecting surface and is irradiated to the upper end plane. With the sensor, the path of light incident at a angle of incidence of 68 degrees to the sensor surface after first being reflected by the reflecting surface is considered but the SPR signals obtained for the respective light paths are the same. The angle of incidence of the light with respect to the sensor surface is by no means limited to 68 degrees and may be appropriately selected to be from 60 degrees to 80 degrees.

The sensor surface of the sensor probe is made by sputtering gold to a film thickness of 52nm and chrome to a thickness of 2nm. The reflecting surface is made by sputtering chrome to a thickness of approximately 100nm. BK7 glass is used for the sensor probe. The diameter of the sensor probe is 3mm and the length is 15mm. FIG. 7 and FIG. 8 are views showing known probe-type SPR sensors, with it being possible to apply the differential method of the present invention to these known probe-type SPR sensors.

An expanded view of a sensor probe of a differential SPR sensor is shown in FIG. 4. Dielectric layers of differing film thicknesses are then formed on the left and right sensor surfaces so as to construct a differential sensor probe. At the sensor surface, plasma polymerization films of different film thicknesses are formed on the metal film so as to configure a differential SPR sensor. The dielectric layers are made through plasma polymerization of Hexamethyldisiloxane (HDMS). The HMDS plasma polymerization film is firmly formed on the metal film and is hydrophobic, which prevents non-specific protein adsorption. The thicknesses of the plasma polymerization films are of an extent that ensures sufficient separation of the resonance frequencies and are taken to be 1nm and 34nm. With this plasma polymerization, after creating a vacuum of 1.3 Pa inside a bell jar, a monomer gas is introduced at 40Pa, and a monomer gas is made into a plasma using an RF oscillator. In this embodiment, Hexamethyldisiloxane (HMDS) (Shinetsu silicone) is used as the monomer gas, the polymerization time is 5 seconds for the reference surface and 150 seconds for the working surface, and the oscillating output is 150W in either case.

In FIG. 4, only the thin plasma polymerization film is formed on the surface shown as the sensor surface (a). A plasma polymerization film of a thick film thickness is formed on the surface shown for sensor surface (b) and Bovine Serum Albumin (BSA) is immobilized onto the plasma polymerization film. In this specification, the surface for the thin dielectric layer where BSA is not immobilized is referred to as the reference surface, and the surface for the thick dielectric layer where BSA is immobilized is referred to as the working surface. It is also possible to immobilize BSA to the dielectric layer of a thin film thickness and take this layer as the working layer. Regarding the immobilizing of antigens to the sensor probe, the sensor probe is soaked for approximately 8 hours in a solution of 10g/l of bovine serum albumin mixed with phosphate buffer solution so that the bovine serum albumin is immobilized to the sensor probe. During this time, an adhesive tape is stuck onto the reference surface of the sensor probe and the BSA is prevented from becoming immobilized to the reference surface.

A description is given of the fixing of the sensor probe based on FIG. 5. In FIG. 5, it is shown that a sensor probe is inserted from the right side with respect to a cylindrical fixing member and an optical fiber is inserted from the left side at the fixing member. The diameter of the optical fiber core is 200µm and the numerical aperture is 0.39. In this embodiment, for example, a plano-convex lens is used in order to make light from the optical fiber collimated light. The diameter of the plano-convex lens is 4mm and the focal length is 4mm. Further, this lens also acts to make light reflected from the sensor probe into focused light or converging light having a focal point at the end plane of the optical fiber.

A description is given of the overall structure of the probe-type SRP sensor based on FIG. 6. Light from a 50W halogen lamp (light source) is put into the form of collimated light using a lens and a mirror. The collimated light passes through the beam splitter and is made to pass through the optical fiber by the lens. The sensor probe and the sensor probe fixing member are connected at the end plane of the optical fiber in the drawing. Light reflected from the sensor probe is guided to a spectroscope via the beam splitter and optical fiber. Light from the spectroscope is detected by the CCD and resonance wavelengths are read by computer.

The relationship of the reflected light intensity and the wavelength obtained by the differential SPR sensor probe is shown in FIG. 9. Two resonance wavelengths can be confirmed from the drawing. Here, the resonance wavelength at the surface of the thick plasma polymerization film on which BSA is immobilized and the resonance wavelength of the surface for the thin plasma polymerization film on which BSA is not immobilized are shown. Here, the surface of the thick plasma polymerization film on which BSA is immobilized is referred to as the active surface and the surface for the thin plasma polymerization film on which BSA is not immobilized is referred to as the reference surface.

Examples of results measured for antigen-antibody reactions using a differential SPR sensor are shown in FIG. 10. Results obtained for the working surface and results obtained for the reference surface are shown together in the FIG. 10. In the results in both cases, the buffer solution for the region (a) not including antibodies in (1) is measured for ten minutes, and the buffer solution including antibodies in the region for (b) is measured for twenty minutes. Again, in the region for (c), the buffer solution not including antibodies is measured again for ten minutes.

From FIG. 10, for the region (b) for the results obtained for the working surface, it can be understood that increases in the resonance wavelengths due to antigen-antibody reactions can be observed. On the other hand, at region (b) of the reference surface, only changes depending on changes in the dielectric constant of the whole material can be confirmed. With a typical SPR sensor, antibody results can be quantified by comparing the resonance wavelengths of the regions (a) and (c) occurring for signals at the working surface of FIG. 10.

Changes in signals over time obtained by subtracting a signal obtained for the reference surface from a resonance wavelength obtained at the working surface in FIG. 10 are shown in FIG. 11. An increase in the resonance wavelength in the region (b) can also be confirmed for FIG. 11 as with the results obtained for the working surface of FIG. 10. In this case, the antibody binding amount can be considered to be characterized by the change in resonance wavelength of the start time of the region (b) and the resonance wavelength for the end time for the region (b). The measurements shown for the regions (a) and (c) are not necessary in the case of calculating antibody concentration in accordance with this method.

FIG. 12 shows a calibration curve for antibody concentration obtained using a typical method calibration curve and a calibration curve for the case of using a differential method. It can be determined that the method for calculating antibody concentration from the results in FIG. 12 based on both methods is not substantially different. From the above, measurement is possible that only requires measurement of the sample in cases using a differential probe-type SPR sensor. When various materials exist within the sample being measured, these materials become non-specifically bound with the metal layers and it can be predicted that measurement precision will be lowered. However, in the case of a differential probe-type SPR sensor, values for subtracting the reference surface signal from the working surface signal are valid values and can be considered to compensate for changes in resonance wavelengths caused by non-specific binding.

### Industrial Applicability

The SPR sensor of the present invention can be utilized to measure specific proteins or chemical substances existing in a living body or environment. Specifically, a probe-type SPR sensor is capable of measuring a sample in situ.

## Claims

1. A differential SPR sensor formed with a surface immobilized with a recognition substance and a surface not immobilized with the substance on a metal film, said sensor comprising a plurality of dielectric films of differing film thicknesses formed on the metal film, wherein one of said dielectric films is taken to be a reference surface and at least the other one dielectric film is taken to be a working surface immobilized with the recognition substance.

2. The sensor of claim 1, wherein said sensor is a probe-type SPR sensor and wherein the reference and working surfaces are formed on the metal film constituting a sensor surface of the probe.

3. The sensor of claim 2, said sensor comprising a light source, a sensor probe, and an optical detector; said probe comprising a metal film constituting a sensor surface, and a reflecting surface, and an end constituting an input/output end for light; said light source optically connecting to said end portion; and said optical detector receiving light emitted from said end portion of the probe via said metal film and reflecting surface.

4. The sensor of claim 3, wherein said metal film and reflecting surface are formed of the distal end the probe.

5. The sensor of claim 4, wherein an incident angle of the light is ranged between 60 degrees to 80 degrees to the sensor surface.

6. The sensor of claim 4, wherein said sensor surface and reflecting surface are formed as inclined surfaces extending in the lengthwise direction of the probe and wherein said sensor surface and reflecting surface meet a right-angles with respect to each other.

7. The sensor of claim 5, wherein said sensor surface and reflecting surface are formed as inclined surfaces extending in the lengthwise direction of the probe and wherein said sensor surface and reflecting surface meet a right-angles with respect to each other.

8. The method of using a differential SPR sensor, said sensor formed with a surface immobilized with a recognition substance and a surface not immobilized with the substance on a metal film, said sensors comprising a plurality of dielectric films of differing film thicknesses formed on the metal film, wherein one dielectric film is taken to be a reference surface and at least the other one dielectric film is taken to be a working surface immobilized with the recognition substance, wherein a substance to be measured is measured by comparing a result obtained from the working surface and a result obtained from the reference surface.

9. The method of claim 8, wherein resonance wavelengths of the working surface and reference surface are compared.

10. The method of claim 9, wherein said sensor is a probe-type sensor.
